# EUROPEAN PATENT SPECIFICATION

(11) **EP 3 055 524 B1**
(45) Date of publication and mention of the grant of the patent: **26.07.2017**
(21) Application number: 14787261.8
(22) Date of filing: 01.10.2014
(51) Int. Cl.: F01N 3/20

(54) **EXHAUST GAS CONTROL APPARATUS FOR AN INTERNAL COMBUSTION ENGINE AND CORRESPONDING CONTROL METHOD**
ABGASSTEUERUNGSVORRICHTUNG FÜR EINE BRENNKRAFTMASCHINE UND ENTSPRECHENDES STEUERUNGSVERFAHREN
DISPOSITIF DE CONTRÔLE DE GAZ D'ÉCHAPPEMENT POUR UN MOTEUR À COMBUSTION INTERNE ET PROCÉDÉ DE CONTRÔLE CORRESPONDANT

(30) Priority: 08.10.2013 JP 2013211106
(43) Date of publication of application: 17.08.2016
(73) Proprietor: TOYOTA JIDOSHA KABUSHIKI KAISHA, Toyota-shi, Aichi-ken 471-8571 (JP)
(72) Inventor: NAKAI, Keigo, Toyota-shi Aichi-ken 471-8571 (JP); OTA, Hirohiko, Toyota-shi Aichi-ken 471-8571 (JP)
(74) Representative: D Young & Co LLP
(86) International application number: PCT/IB2014/002124
(87) International publication number: WO 2015/052575

(56) References cited:
- WO-A1-2011/142708
- DE-A1-102011 118 214
- JP-A- 2009 197 710

## Description

### BACKGROUND OF THE INVENTION

### 1. Field of the Invention

The invention relates to an exhaust gas control apparatus for an internal combustion engine, and a control method for the internal combustion engine.

### 2. Description of Related Art

There is known an exhaust gas control apparatus that is equipped with a catalyst that purifies exhaust gas through the use of a reducing agent, and an addition valve that adds the reducing agent to an exhaust passage. This addition valve may begin to be clogged to some extent, at a leading end thereof or in an inside thereof, due to the deposition of foreign matters such as deposits and the like. The amount of the reducing agent actually added from the addition valve is smaller when the addition valve is thus clogged than when the addition valve is not clogged. Accordingly, the amount of the actually added reducing agent becomes insufficient with respect to the required amount of the reducing agent, so the performance of purifying exhaust gas may deteriorate.

For example, with a device described in Japanese Patent Application Publication No. 2009-197710 (JP-2009-197710 A), an actual addition amount of a reducing agent is calculated based on a change in the pressure in an addition agent supply passage at the time of addition of the reducing agent, namely, a change in the pressure of the reducing agent supplied to the addition valve or the like. Then, the addition amount of the reducing agent is restrained from becoming insufficient by correcting an addition command value to the addition valve based on a difference between the actual addition amount thus calculated and a required addition amount.

When the reducing agent is added, the pressure of the reducing agent supplied to the addition valve may also change depending on factors other than the clogging of the addition valve. Therefore, if the addition amount is corrected based on the change in the pressure of the reducing agent supplied to the addition valve without taking those other factors into account, the appropriate correction of the addition amount may be difficult. As a result, it may become difficult to restrain the addition amount of the reducing agent from becoming insufficient due to the clogging of the addition valve. An exhaust gas control apparatus according to the preamble of claim 1 is known from document DE 10 2011 118 214 A.

### SUMMARY OF THE INVENTION

The invention provides an exhaust gas control apparatus for an internal combustion engine and a control method for the internal combustion engine that can appropriately restrain the addition amount of a reducing agent from becoming insufficient due to the clogging of an addition valve.

In a first aspect of the invention, an exhaust gas control apparatus for an internal combustion engine, the exhaust gas control apparatus includes a catalyst, an addition valve, a pressure detection unit, and a control unit. The catalyst purifies exhaust gas through addition of a reducing agent. The addition valve adds the reducing agent to an exhaust passage. The pressure detection unit detects a pressure of the reducing agent in the addition valve. The control unit is configured to control an amount of addition of the reducing agent by the addition valve. The control unit is configured to perform an addition amount correction process for correcting the addition amount such that the amount of the reducing agent added by the addition valve increases as a rate of decrease in the pressure of the reducing agent after opening of the addition valve decreases. The control unit is configured to reduce an increase correction amount for the amount of addition through the addition amount correction process as a temperature of a leading end of the addition valve decreases.

When the addition valve opens, the reducing agent is added from the addition valve to the exhaust passage, so the pressure of the reducing agent in the addition valve is low. If the addition valve is clogged, the actual addition amount of the reducing agent added from the addition valve is small. Therefore, the rate of decrease in the pressure of the reducing agent after the opening of the addition valve decreases as the amount of clogging in the addition valve increases, and as the actual addition amount of the reducing agent decreases.

According to the aforementioned configuration, the addition amount correction process is performed. In the addition amount correction process, the addition amount is corrected such that the amount of the reducing agent added from the addition valve increases as the rate of decrease in the pressure of the reducing agent after the opening of the addition valve decreases, namely, as the amount of insufficiency in the actual addition amount of the reducing agent increases. Owing to this addition amount correction process, the addition amount of the reducing agent is restrained from becoming insufficient due to the clogging of the addition valve.

The rate of decrease in the pressure of the reducing agent after the opening of the addition valve may also change depending on factors other than the clogging of the addition valve. More specifically, as the temperature of the reducing agent in the addition valve decreases, the viscosity of the reducing agent increases, so the actual addition amount of the reducing agent added from the addition valve decreases. Accordingly, the rate of decrease in the pressure of the reducing agent after the opening of the addition valve decreases as the temperature of the reducing agent in the addition valve decreases. If the addition amount of the reducing agent is corrected based on the rate of decrease in the pressure of the reducing agent without taking this change in the vicinity of the reducing agent into account, the addition amount of the reducing agent is excessively corrected to be increased as the temperature of the reducing agent decreases. In the addition valve, the temperature of a leading end portion thereof that is exposed to high-temperature exhaust gas is the highest, so the change in the rate of decrease in the pressure of the reducing agent resulting from the viscosity of the reducing agent is greatly influenced by the temperature of the leading end of the addition valve.

According to the aforementioned configuration, the increase -correction amount for the amount of the reducing agent added through the aforementioned addition amount correction process is reduced as the temperature of the leading end of the addition valve decreases. Accordingly, the increase correction amount for the addition amount of the reducing agent is set to a suitable amount in accordance with the temperature of the reducing agent in the addition valve. Therefore, the addition amount of the reducing agent can be restrained from being excessively corrected to be increased as the temperature of the reducing agent decreases. Thus, the addition amount of the reducing agent can be appropriately restrained from becoming insufficient due to the clogging of the addition valve.

In the aforementioned exhaust gas control apparatus, the control unit may be configured to reduce the increase correction amount as a temperature of the reducing agent supplied to the addition valve decreases. In this manner, the increase correction amount for the addition amount is reduced as the temperature of the leading end of the addition valve decreases.

According to the aforementioned configuration, in the case where the increase correction amount for the addition amount in the aforementioned addition amount correction process is corrected based on the temperature of the leading end of the addition valve, the temperature of the reducing agent supplied to the addition valve is also taken into account. Accordingly, the aforementioned increase correction amount can be more accurately corrected in accordance with the temperature of the reducing agent in the addition valve.

The time that is required until the pressure of the reducing agent after the opening of the addition valve decreases to a predetermined threshold is long as the rate of decrease in the pressure of the reducing agent decreases. In the exhaust gas control apparatus, the control unit may be configured to detect the rate of decrease by measuring a decreasing time that is required until the pressure of the reducing agent after opening of the addition valve decreases to a predetermined threshold, and the control unit may be configured to correct the amount of the reducing agent added from the addition valve such that the addition amount increases as the decreasing time is long.

The decreasing amount of the pressure of the reducing agent between the opening of the addition valve and the lapse of a predetermined time decreases as the rate of decrease in the pressure of the reducing agent decreases. In the exhaust gas control apparatus, the control unit may be configured to detect the rate of decrease by measuring a decreasing amount of the pressure of the reducing agent between opening of the addition valve and lapse of a predetermined time, and the control unit may be configured to correct the amount of the reducing agent added from the addition valve such that the addition amount increases as the decreasing amount of the pressure of the reducing agent decreases.

In a second aspect of the invention, a control method for an internal combustion engine that is equipped with a catalyst that purifies exhaust gas through addition of a reducing agent, and an addition valve that adds the reducing agent to an exhaust passage, the control method includes: detecting a pressure of the reducing agent in the addition valve; and performing an addition amount correction process for correcting an amount of the reducing agent added from the addition valve such that the addition amount increases as a rate of decrease in the pressure of the reducing agent after opening of the addition valve decreases, and reducing an increase correction amount for the addition amount through the addition amount correction process as a temperature of a leading end of the addition valve decreases.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view showing the configuration of an exhaust gas control apparatus for an internal combustion engine according to the first embodiment of the invention;
FIG. 2 is a timing chart showing how the pressure of urea after the opening of a urea addition valve changes in the present embodiment of the invention;
FIG. 3 is a flowchart showing the procedure of an addition amount correction process in the present embodiment of the invention;
FIG. 4 is a table showing a relationship between the temperature of a leading end of the urea addition valve and a first time coefficient in the present embodiment of the invention;
FIG. 5 is a table showing a relationship between the temperature of urea and a second time coefficient in the present embodiment of the invention;
FIG. 6 is a table showing a relationship between a post-correction decreasing time and a urea correction amount in the present embodiment of the invention;
FIG. 7 is a timing chart showing how the pressure of urea after the opening of the urea addition valve changes in the second embodiment of the invention;
FIG. 8 is a flowchart showing the procedure of an addition amount correction process in the present embodiment of the invention;
FIG. 9 is a table showing a relationship between the temperature of a leading end of the urea addition valve and a first decreasing amount coefficient in the present embodiment of the invention;
FIG. 10 is a table showing a relationship between the temperature of urea and a second decreasing amount coefficient in a modification example of the present embodiment of the invention; and
FIG. 11 is a table showing a relationship between a post-correction pressure decreasing amount and a urea correction amount in the present embodiment of the invention.

### DETAILED DESCRIPTION OF EMBODIMENTS

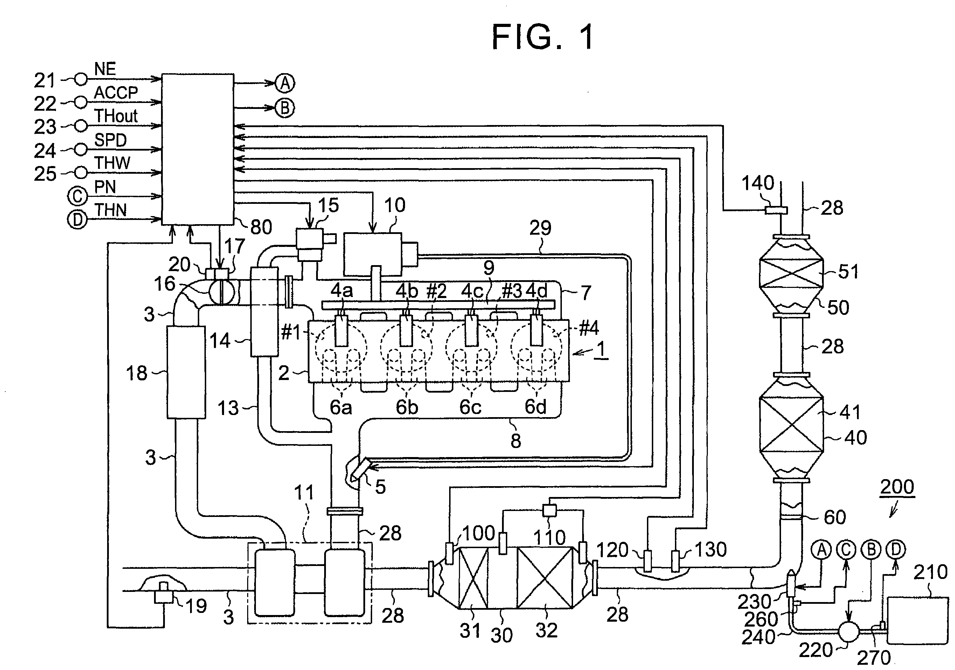

Hereinafter, the first embodiment of the invention as a concretization of an exhaust gas control apparatus for an internal combustion engine will be described with reference to FIGS. 1 to 6.

FIG. 1 shows the configurations of a -diesel engine (hereinafter referred to simply as "an engine") as an internal combustion engine to which the exhaust gas control apparatus is applied, and the exhaust gas control apparatus that is provided in this engine 1. The engine 1 is provided with a plurality of cylinders #1 to #4. A cylinder head 2 is equipped with a plurality of fuel injection valves 4a to 4d in such a manner as to correspond to the cylinders #1 to #4 respectively. These fuel injection valves 4a to 4d inject fuel into combustion chambers of the cylinders #1 to #4 respectively. The cylinder head 2 is provided with intake ports for introducing fresh air into the cylinders, and exhaust ports 6a to 6d for discharging combustion gas to the outside of the cylinders, in such a manner as to correspond to the cylinders #1 to #4 respectively.

The fuel injection valves 4a to 4d are connected to a common rail 9 in which high-pressure fuel is accumulated. The common rail 9 is connected to a supply pump 10. The supply pump 10 sucks fuel in a fuel tank, and supplies high-pressure fuel to the common rail 9. The high-pressure fuel supplied to the common rail 9 is injected from the fuel injection valves 4a to 4d into the cylinders when the fuel injection valves 4a to 4d are opened respectively.

An intake manifold 7 is connected to the intake ports. The intake manifold 7 is connected to an intake passage 3. An intake throttle valve 16 for adjusting the amount of intake air is provided in the intake passage 3.

An exhaust manifold 8 is connected to the exhaust ports 6a to 6d. The exhaust manifold 8 is connected to an exhaust passage 28. A turbocharger 11 is disposed in the exhaust passage 28. The turbocharger 11 supercharges the intake air introduced into the cylinders with the aid of an exhaust pressure. An intercooler 18 is provided between an intake-side compressor of the turbocharger 11 and the intake throttle valve 16. This intercooler 18 is designed to cool the intake air whose temperature has increasen through the supercharging by the turbocharger 11.

A first purification member 30 is disposed in the exhaust passage 28 downstream of an exhaust-side turbine of the turbocharger 11. The first purification member 30 purifies exhaust gas. An oxidation catalyst 31 and a filter 32 are disposed in series with respect to a flow direction of exhaust gas, inside the first purification member 30.

A catalyst that performs a treatment of oxidizing the HC in exhaust gas is supported by the oxidation catalyst 31. The filter 32 is a member that collects the particulate matter (PM) in exhaust gas, and is constituted by a porous ceramic. A catalyst for promoting the oxidation of PM is supported by this filter 32, and the PM in exhaust gas is collected when passing through a porous wall of the filter 32.

A fuel addition valve 5 for supplying fuel to the oxidation catalyst 31 and the filter 32 as an addition agent is provided in the vicinity of an assembly portion of the exhaust manifold 8. This fuel addition valve 5 is connected to the supply pump 10 via a fuel supply pipe 29. The position where the fuel addition valve 5 is disposed can also be appropriately changed as long as it is located upstream of the first purification member 30 in an exhaust system. By adjusting the timing for injecting fuel to carry out post injection, fuel may be supplied to the oxidation catalyst 31 and the filter 32 as an addition agent.

When the amount of the PM collected by the filter 32 exceeds a predetermined value, a regeneration process of the filter 32 is started. In the regeneration process, fuel is injected from the fuel addition valve 5 into the exhaust manifold 8. The fuel injected from the fuel addition valve 5 is burned upon reaching the oxidation catalyst 31. Thus, an attempt is made to raise the temperature of exhaust gas. The exhaust gas whose temperature has been raised by the oxidation catalyst 31 flows into the filter 32, so the temperature of the filter 32 is raised. Thus, the PM deposited in the filter 32 is subjected to an oxidation treatment, and an attempt is made to regenerate the filter 32.

A second purification member 40 that purifies exhaust gas is disposed in the exhaust passage 28 downstream of the first purification member 30. A selective reduction-type NOx catalyst (hereinafter referred to as an SCR catalyst) 41 is disposed inside the second purification member 40, as an NOx purification catalyst that purifies the NOx in exhaust gas through the use of a reducing agent.

A third purification member 50 that purifies exhaust gas is disposed in the exhaust passage 28 downstream of the second purification member 40. An ammonia oxidation catalyst 51 that purifies the ammonia in exhaust gas is disposed inside the third purification member 50.

The engine 1 is provided with an aqueous urea solution supply mechanism 200 as a reducing agent supply mechanism that supplies a reducing agent to the aforementioned SCR catalyst 41. The aqueous urea solution supply mechanism 200 is constituted of a tank 210 that stores aqueous urea solution, a urea addition valve 230 that injects and supplies aqueous urea solution into the exhaust passage 28, a supply passage 240 that connects the urea addition valve 230 and the tank 210 to each other, an electric pump 220 that is provided in the supply passage 240, and the like.

The urea addition valve 230 is provided in the exhaust passage 28 between the first purification member 30 and the second purification member 40. An injection hole of the urea addition valve 230 is directed toward the SCR catalyst 41. When this urea addition valve 230 is opened, aqueous urea solution is injected and supplied into the exhaust passage 28 via the supply passage 240.

A dispersion plate 60 that promotes atomization of the aqueous urea solution injected from the urea addition valve 230 by dispersing the aqueous urea solution upstream of the SCR catalyst 41 is provided in the exhaust passage 28 between the urea addition valve 230 and the SCR catalyst 41.

The aqueous urea solution injected from the urea addition valve 230 is hydrolyzed by the heat of exhaust gas, and turns into ammonia. Then, this ammonia is supplied to the SCR catalyst 41 as a reducing agent for NOx. The ammonia supplied to the SCR catalyst 41 is occluded by the SCR catalyst 41, and is utilized to reduce NOx.

In addition, the engine 1 is equipped with an exhaust gas recirculation device (hereinafter referred to as an EGR device). The EGR device is a device that introduces part of exhaust gas into intake air to lower the combustion temperature in the cylinders and reduce the generation amount of NOx. The EGR device is constituted of an EGR passage 13 that establishes communication between the intake passage 3 and the exhaust manifold 8, an EGR valve 15 that is provided in the EGR passage 13, an EGR cooler 14 and the like. The opening degree of the EGR valve 15 is adjusted, so the recirculation amount of exhaust introduced into the intake passage 3 from the exhaust passage 28, namely, the amount of EGR is regulated. The EGR cooler 14 lowers the temperature of exhaust gas flowing in the EGR passage 13.

The engine 1 is equipped with various sensors for detecting an engine operation state. For example, an airflow meter 19 detects an intake air amount GA. A throttle valve opening degree sensor 20 detects an opening degree of the intake throttle valve 16. An engine rotational speed sensor 21 detects a rotational speed of a crankshaft, namely, an engine rotational speed NE. An accelerator sensor 22 detects a depression amount of an accelerator pedal, namely, an accelerator operation amount ACCP. An outside air temperature sensor 23 detects an outside air temperature THout. A vehicle speed sensor 24 detects a vehicle speed SPD of a vehicle that is mounted with the engine 1. A coolant temperature sensor 25 detects a coolant temperature THW of the engine 1. A pressure sensor 260 as a pressure detection unit that is provided in the supply passage 240 in the vicinity of the urea addition valve 230 detects a urea pressure PN as a pressure of the aqueous urea solution supplied to the urea addition valve 230. A temperature sensor 270 that is provided in the supply passage 240 in the vicinity of the tank 210 detects a urea temperature THN as a temperature of the aqueous urea solution supplied to the urea addition valve 230.

A first exhaust gas temperature sensor 100 that is provided upstream of the oxidation catalyst 31 detects a first exhaust gas temperature TH1 as a temperature of the exhaust gas that has not flowed into the oxidation catalyst 31. A differential pressure sensor 110 detects a differential pressure ΔP as a pressure difference between a pressure of exhaust gas upstream of the filter 32 and a pressure of exhaust gas downstream of the filter 32. A second exhaust gas temperature sensor 120 and a first NOx sensor 130 are provided upstream of the urea addition valve 230, in the exhaust passage 28 between the first purification member 30 and the second purification member 40. The second exhaust gas temperature sensor 120 detects a second exhaust gas temperature TH2 as a temperature of the exhaust gas that has not flowed into the SCR catalyst 41. The first NOx sensor 130 detects a first NOx concentration N1 as a concentration of NOx in the exhaust gas that has not flowed into the SCR catalyst 41, namely, a concentration of NOx in the exhaust gas that has not been purified by the SCR catalyst 41. A second NOx sensor 140 that detects a second NOx concentration N2 as a concentration of NOx in the exhaust gas that has been purified by the SCR catalyst 41 is provided in the exhaust passage 28 downstream of the third purification member 50.

Outputs of these various sensors and the like are input to a control device 80 as a control unit. This control device 80 is mainly constituted by a microcomputer that is equipped with a central processing unit (a CPU), a read only memory (a ROM) that stores various programs, maps and the like in advance, a random access memory (a RAM) that temporarily stores a calculation result of the CPU and the like, a timer counter, an input interface, an output interface and the like.

The control device 80 performs various kinds of control of the engine 1, for example, fuel injection control of the fuel injection valves 4a to 4d and the fuel addition valve 5, discharge pressure control of the supply pump 10, drive amount control of an actuator 17 that opens/closes the intake throttle valve 16, opening degree control of the EGR valve 15, and the like. The control device 80 also performs various kinds of exhaust gas purification control such as the aforementioned regeneration process for burning the PM collected by the aforementioned filter 32 and the like.

The control device 80 performs addition control to control the addition of aqueous urea solution by the aforementioned urea addition valve 230 as a kind of exhaust gas purification control. With this addition control, a urea addition amount QE that is needed to perform a reduction treatment of the NOx discharged from the engine 1 is calculated based on an engine operation state or the like. Then, the valve-open state of the urea addition valve 230 is controlled such that the calculated urea addition amount QE is injected from the urea addition valve 230.

When the leading end and interior of the urea addition valve 230 begin to be clogged to some extent due to the deposition of foreign matters such as deposits and the like, the actual addition amount of the urea injected from the urea addition valve 230 (hereinafter referred to as an actual addition amount) QER is smaller than in the case where such clogging has not occurred. Accordingly, the actual addition amount QER is insufficient with respect to the aforementioned urea addition amount QE that is required for the purification of exhaust gas, so the performance of purifying exhaust gas deteriorates.

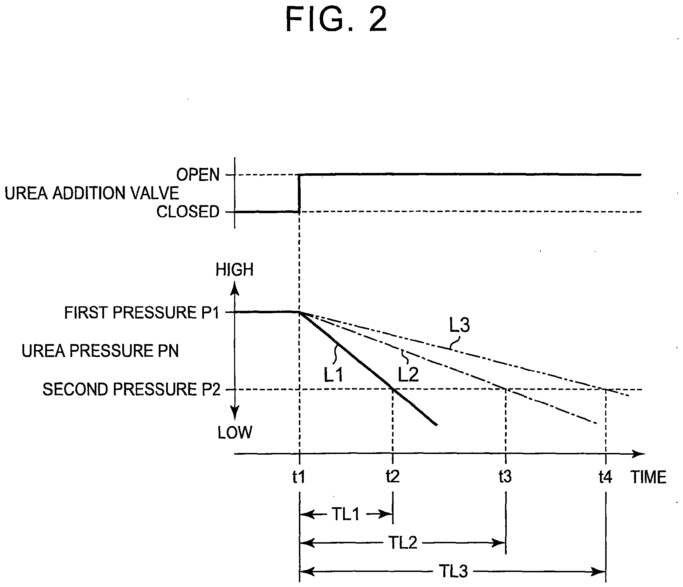

In the present embodiment of the invention, the addition amount of aqueous urea solution is appropriately restrained from becoming insufficient due to the clogging of the urea addition valve 230, in the following manner. FIG. 2 shows how the urea pressure PN changes after the urea addition valve 230 is opened. A solid line L1 of FIG. 2 indicates how the urea pressure PN changes when the urea addition valve 230 is not clogged. Besides, an alternate long and short dash line L2 indicates how the urea pressure PN changes when the urea addition valve 230 is clogged.

When the urea addition valve 230 opens (at a time point t1) as indicated by the solid line L1 in this FIG. 2, aqueous urea solution is injected from the urea addition valve 230 to the exhaust passage 28, so the urea pressure PN in the urea addition valve 230 gradually decreases. When the urea addition valve 230 is clogged, the pressure loss increases in an injection system for aqueous urea solution, and the actual addition amount QER of the aqueous urea solution added from the urea addition valve 230 may become small. Therefore, as indicated by the alternate long and short dash line L2, when the urea addition valve 230 is clogged and the actual addition amount QER has become small, the rate of decrease in the urea pressure PN after the opening of the urea addition valve 230 is low.

For example, a decreasing time TL as a time that is required until the urea pressure PN regulated to a predetermined first pressure P1 before the opening of the urea addition valve 230 decreases to a predetermined second pressure P2 after the opening of the urea addition valve 230 is long as the rate of decrease in the urea pressure PN decreases. Accordingly, as shown in FIG. 2, a decreasing time TL2 at the time when the urea addition valve 230 is clogged is longer than a decreasing time TL1 at the time when the urea addition valve 230 is not clogged.

The rate of decrease in the urea pressure PN decreases as the actual addition amount QER decreases due to an increase in the amount of clogging in the urea addition valve 230. Therefore, the decreasing time TL is long as the amount of clogging in the urea addition valve 230 increases.

The control device 80 calculates a urea correction amount H for correcting the urea addition amount QE such that the actual addition amount QER increases as the rate of decrease in the urea pressure PN after the opening of the urea addition valve 230 decreases, namely, as the amount of insufficiency in the actual addition amount QER increases. Then, the control device 80 performs an addition amount correction process for correcting the urea addition amount QE in an increasing manner with the calculated urea correction amount H. Owing to this addition amount correction process, the actual addition amount QER is restrained from becoming insufficient due to the clogging of the urea addition valve 230.

The rate of decrease in the urea pressure PN after the opening of the urea addition valve 230 also changes depending on factors other than the clogging of the urea addition valve 230. More specifically, as the temperature of the aqueous urea solution in the urea addition valve 230 decreases, the viscosity of aqueous urea solution increases, so the actual addition amount QER of the aqueous urea solution added from the urea addition valve 230 decreases. Accordingly, the rate of decrease in the urea pressure PN after the opening of the urea addition valve 230 decreases as the temperature of the aqueous urea solution in the urea addition valve 230 decreases.

For example, in FIG 2 referred to above, even in the case where the urea addition valve 230 is clogged to the same extent as indicated by the alternate long and short dash line L2, the actual addition amount QER is smaller due to an increase in the viscosity of aqueous urea solution when the temperature of the aqueous urea solution in the urea addition valve 230 is low than when the temperature of aqueous urea solution is high. As indicated by an alternate long and two short dashes line L3 in FIG. 2, even in the case where the degree of clogging remains unchanged, when the temperature of the aqueous urea solution in the urea addition valve 230 is low, the rate of decrease in the urea pressure PN after the opening of the urea addition valve 230 is lower than in the state indicated by the alternate long and short dash line L2. A decreasing time TL3 at this low temperature is longer than the aforementioned decreasing time TL2.

If the urea addition amount QE is corrected based on the rate of decrease in the urea pressure PN without taking this change in the viscosity of aqueous urea solution into account, the urea addition amount QE is excessively corrected to be increased as the temperature of aqueous urea solution decreases. The leading end portion of the temperature of the urea addition valve 230 becomes the highest temperature compared with the other part of the urea addition valve 230. Therefore, the change in the rate of decrease in the urea pressure PN due to the viscosity of aqueous urea solution is greatly influenced by the temperature of the leading end of the urea addition valve 230.

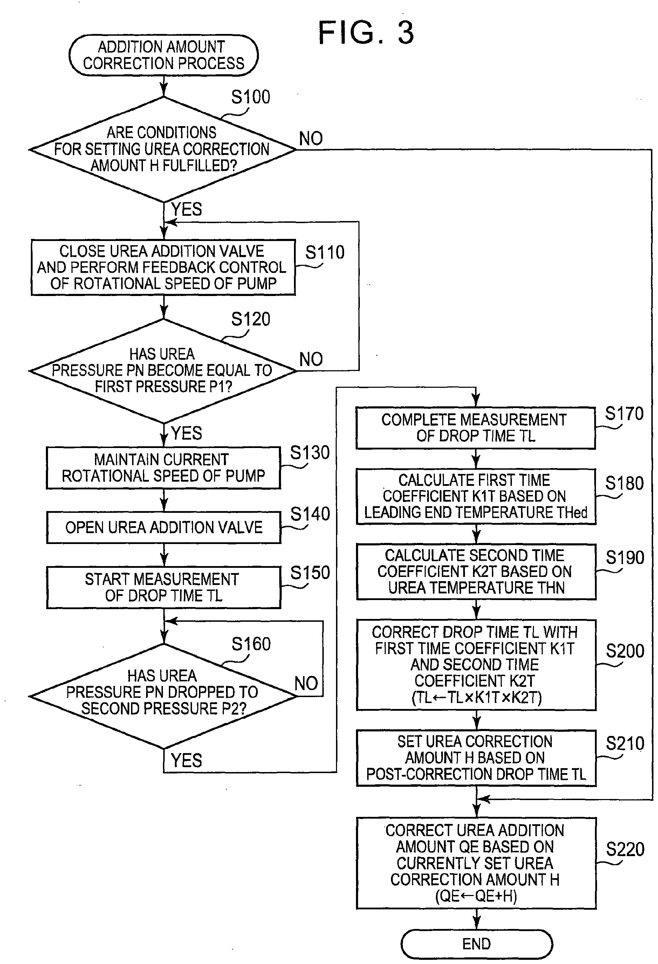

In the present embodiment of the invention, the correction amount for the urea addition amount QE through the aforementioned addition amount correction process is reduced as the temperature of the leading end of the urea addition valve 230 decreases. Hereinafter, the aforementioned addition amount correction process performed by the control device 80 will be described with reference to FIGS. 3 to 5. The addition amount correction process of FIG. 3 is repeatedly performed on a predetermined cycle.

When the addition amount correction process of FIG. 3 is started, the control device 80 determines whether or not all the conditions for setting the aforementioned urea correction amount H are fulfilled (S100). As these setting conditions, a condition "that the supply of fuel to the engine 1 be suspended" and a condition that "a predetermined period have elapsed after the last setting of the urea correction amount H (e.g., that the running distance or elapsed time after the last setting of the urea correction amount H have reached a predetermined threshold etc.)" are set.

Then, when even one of these setting conditions is not fulfilled (S100: NO), the control device 80 adds the currently set urea correction amount H to the urea addition amount QE, thereby correcting the urea addition amount QE (S220). In case the urea correction amount H is not set once, the urea correction amount H is corrected with a predetermined initial value (e.g., "0" or the like) of the urea correction amount H. Then, the control device 80 temporarily ends the present process. When the urea addition amount QE is thus corrected, the control device 80 performs drive control of the urea addition valve 230 such that the post-correction urea addition amount QE is added from the urea addition valve 230.

On the other hand, when all the conditions for setting the urea correction amount H are fulfilled (S100: YES), the control device 80 closes the urea addition valve 230, and performs feedback control of the rotational speed of the pump 220 such that the urea pressure PN becomes equal to the predetermined first pressure P1 (S110).

Subsequently, the control device 80 determines whether or not the urea pressure PN has become equal to the first pressure P1 (S120). Then, when the urea pressure PN has not become equal to the first pressure P1 (S120: NO), the control device 80 performs feedback control of the pump 220 with the urea addition valve 230 closed, by repeating the respective processing contents of step S110 and step S120 until the urea pressure PN becomes equal to the first pressure P1.

On the other hand, when the urea pressure PN has become equal to the first pressure P1 (S120: YES), the control device 80 maintains the current rotational speed of the pump 220 (S130). Thus, the urea pressure PN is held equal to the first pressure P1.

When the rotational speed of the pump 220 is maintained, the control device 80 opens the urea addition valve 230 (S140). Subsequently, the control device 80 starts the measurement of the aforementioned decreasing time TL (S150).

Subsequently, the control device 80 determines whether or not the urea pressure PN has decreased to the aforementioned predetermined second pressure P2 (S160). A pressure lower than the aforementioned first pressure P1 is set as the second pressure P2. Then, when the urea pressure PN has not decreased to the second pressure P2 (S160: NO), the control device 80 repeatedly executes the processing contents of making a determination in step S160 until the urea pressure PN decreases to the second pressure P2.

On the other hand, if the urea pressure PN has decreased to the second pressure P2 (S160: YES), the control device 80 completes the measurement of the decreasing time TL (S170). Subsequently, the control device 80 calculates a first time coefficient K1T based on a leading end temperature THed of the urea addition valve 230 (S180).

The leading end temperature THed can also be directly detected by a sensor or the like. In the present embodiment of the invention, however, the leading end temperature THed is estimated based on various parameters, for example, the second exhaust gas temperature TH2 that indicates the temperature of exhaust gas in the vicinity of the urea addition valve 230, an exhaust gas flow rate GS, the outside air temperature THout, and the vehicle speed SPD. That is, the temperature of the leading end of the urea addition valve 230 increases as the second exhaust gas temperature TH2 increases. Therefore, the estimated value of the leading end temperature THed is set to a temperature that increases as the second exhaust gas temperature TH2 increases. The amount of heat moving from exhaust gas to the leading end of the urea addition valve 230 increases as the exhaust gas flow rate GS increases. Therefore, the estimated value of the leading end temperature THed is set to a temperature that increases as the exhaust gas flow rate GS increases. The temperature of the urea addition valve 230 increases as the outside air temperature THout increases. Therefore, the estimated value of the leading end temperature THed is set to a temperature that increases as the outside air temperature THout increases. The effect of cooling the urea addition valve 230 through traveling wind deteriorates as the vehicle speed SPD decreases. Therefore, the estimated value of the leading end temperature THed is set to a temperature that increases as the vehicle speed SPD decreases.

The first time coefficient K1T is a coefficient that corrects the decreasing time TL measured through the processing contents of steps S150 to S170, and is variably set within a range of "0 < K1T ≤ 1".

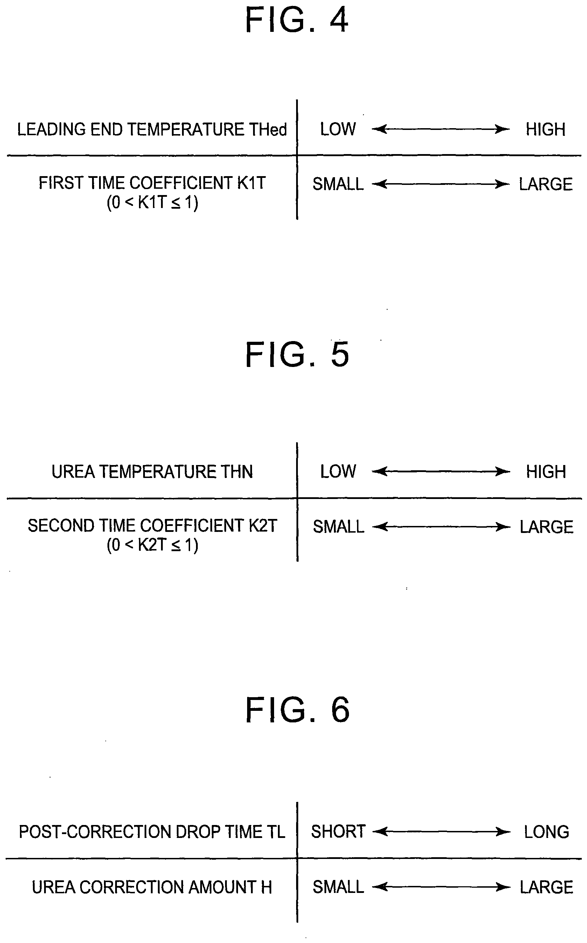

As shown in FIG. 4, the first time coefficient K1T is variably set based on the leading end temperature THed, in such a manner as to decrease as the leading end temperature THed decreases. Subsequently, the control device 80 calculates a second time coefficient K2T based on the urea temperature THN (S190). The second time coefficient K2T is also a coefficient that corrects the aforementioned decreasing time TL, and is variably set within a range of "0 < K2T ≤ 1".

As shown in FIG 5, the second time coefficient K2T is variably set based on the urea temperature THN, in such a manner as to decrease as the urea temperature THN decreases. Subsequently, the control device 80 corrects the decreasing time TL by multiplying the measured decreasing time TL by the first time coefficient K1T and the second time coefficient K2T (TL×K1T×K2T) (S200).

Subsequently, the control device 80 sets the urea correction amount H based on the post-correction decreasing time TL (S210). This urea correction amount H is a value for correcting the aforementioned urea addition amount QE in an increasing manner. A positive value equal to or larger than "0" is set as this urea correction amount H.

As shown in FIG. 6, the urea correction amount H is variably set based on the post-correction decreasing time TL, in such a manner as to increase as the post-correction decreasing time TL is long. When the urea correction amount H is thus set, the control device 80 corrects the urea addition amount QE by adding the currently set urea correction amount H, namely, the urea correction amount H set in step S210 to the urea addition amount QE (S220). Then, the control device 80 temporarily ends the present process. Thus, the urea addition amount QE is corrected, and the control device 80 performs drive control of the urea addition valve 230 such that the post-correction urea addition amount QE is added from the urea addition valve 230.

Next, the operation of the aforementioned addition amount correction process will be described. As shown previously in FIG. 6, the urea correction amount H is variably set in such a manner as to increase as the post-correction decreasing time TL is long, namely, as the rate of decrease in the urea pressure PN after the opening of the urea addition valve 230 decreases. Therefore, the urea addition amount QE is corrected such that the actual addition amount of the aqueous urea solution added from the urea addition valve 230 increases as the amount of insufficiency in the actual addition amount QER increases with respect to the required urea addition amount due to the clogging of the urea addition valve 230. Owing to this addition amount correction process, the actual addition amount QER is restrained from becoming insufficient due to the clogging of the urea addition valve 230.

As described above, the rate of decrease in the urea pressure PN after the opening of the urea addition valve 230 decreases as the temperature of the aqueous urea solution in the urea addition valve 230 decreases, due to the influence of the viscosity of the aqueous urea solution. Therefore, when the urea addition amount QE is corrected based on the aforementioned decreasing time TL without taking this change in the viscosity of aqueous urea solution into account, the urea addition amount QE may be excessively corrected to be increased as the temperature of aqueous urea solution decreases. In this respect, according to the present embodiment of the invention, the increase correction amount for the urea addition amount QE is reduced as the leading end temperature THed of the urea addition valve 230 decreases.

More specifically, the temperature of the aqueous urea solution in the urea addition valve 230 decreases as the leading end temperature THed of the urea addition valve 230 decreases. Therefore, as shown previously in FIG. 4, the value of the first time coefficient K1T is reduced as the leading end temperature THed of the urea addition valve 230 decreases. Accordingly, the post-correction decreasing time TL shortens, and the amount to which the urea correction amount H for correcting the urea addition amount QE in an increasing manner is set decreases, as the leading end temperature THed decreases.

When the urea correction amount H is thus corrected based on the leading end temperature THed of the urea addition valve 230, the temperature of the aqueous urea solution supplied to the urea addition valve 230 is also taken into account. More specifically, as shown previously in FIG. 5, the value of the second time coefficient K2T is reduced as the urea temperature THN as the temperature of the aqueous urea solution supplied to the urea addition valve 230 decreases. Accordingly, the post-correction decreasing time TL shortens, and the amount to which the urea correction amount H for correcting the urea addition amount QE in an increasing manner is set decreases, as the urea temperature THN decreases. Accordingly, the urea correction amount H is more accurately corrected in accordance with the temperature of the aqueous urea solution in the urea addition valve 230.

In this manner, the urea correction amount H is set to a suitable amount in accordance with the temperature of the aqueous urea solution in the urea addition valve 230. Therefore, the urea addition amount QE can be restrained from being excessively corrected to be increased as the temperature of aqueous urea solution decreases. Thus, the addition amount of aqueous urea solution is appropriately restrained from becoming insufficient due to the clogging of the urea addition valve 230.

As described above, according to the present embodiment of the invention, the following effects can be obtained. The addition amount correction process for correcting the urea addition amount QE such that the amount of the aqueous urea solution added from the urea addition valve 230 increases as the rate of decrease in the urea pressure PN after the opening of the urea addition valve 230 decreases is performed. More specifically, the urea addition amount QE is corrected such that the amount of the aqueous urea solution added from the urea addition valve 230 increases as the decreasing time TL as the time that is required until the urea pressure PN decreases from the first pressure P1 to the second pressure P2 after the opening of the urea addition valve 230 is long. Then, in the aforementioned addition amount correction process, the urea correction amount H for correcting the urea addition amount QE in an increasing manner is reduced as the leading end temperature THed of the urea addition valve 230 decreases. Accordingly, the addition amount of aqueous urea solution can be appropriately restrained from becoming insufficient due to the clogging of the urea addition valve 230.

The urea correction amount H of the urea addition amount QE in the addition amount correction process is reduced as the urea temperature THN as the temperature of the aqueous urea solution supplied to the urea addition valve 230 decreases. Accordingly, the urea correction amount H can be more accurately corrected in accordance with the temperature of the aqueous urea solution in the urea addition valve 230.

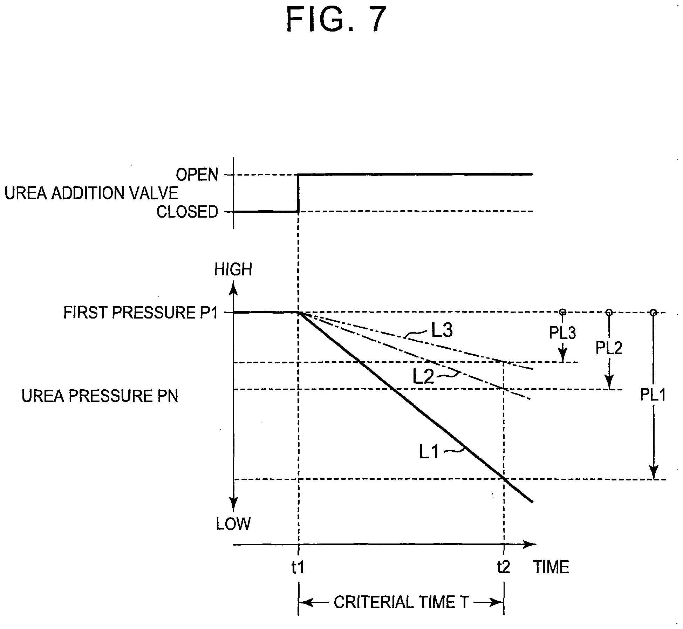

Next, the second embodiment of the invention as a concretization of the exhaust gas control apparatus for the internal combustion engine will be described with reference to FIGS. 7 to 11.

In the first embodiment of the invention, the decreasing time TL as a time that is required until the urea pressure PN decreases from the first pressure P1 to the second pressure P2 after the opening of the urea addition valve 230 is measured as a value that indicates the rate of decrease in the urea pressure PN after the opening of the urea addition valve 230.

On the other hand, the decreasing amount of the urea pressure PN between the opening of the urea addition valve 230 and the lapse of a predetermined time decreases as the rate of decrease in the urea pressure PN decreases. FIG. 7 shows such an example. Incidentally, the solid line L1 shown in FIG. 7 indicates how the urea pressure PN changes when the urea addition valve 230 is not clogged. The alternate long and short dash line L2 shown in FIG. 7 indicates how the urea pressure PN changes when the urea addition valve 230 is clogged and the temperature of the aqueous urea solution in the urea addition valve 230 is high. The alternate long and two short dashes line L3 shown in FIG 7 indicates how the urea pressure PN changes when the urea addition valve 230 is clogged and the temperature of the aqueous urea solution in the urea addition valve 230 is low.

As indicated by the solid line L1 in this FIG. 7, when the urea addition valve 230 opens (at the time point t1), aqueous urea solution is injected from the urea addition valve 230 to the exhaust passage 28. Thus, the urea pressure PN in the urea addition valve 230 gradually decreases. In the case where the urea addition valve 230 is clogged, the pressure loss increases in the injection system for aqueous urea solution, and the actual addition amount QER of the aqueous urea solution added from the urea addition valve 230 may decrease. Therefore, as indicated by the alternate long and short dash line L2, when the urea addition valve 230 is clogged and the actual addition amount QER decreases, the rate of decrease in the urea pressure PN after the opening of the urea addition valve 230 decreases.

For example, a pressure decreasing amount PL as a decreasing amount of the urea pressure PN between the opening of the urea addition valve 230 and the lapse of a predetermined criterial time T decreases as the rate of decrease in the urea pressure PN decreases. In consequence, as shown in FIG. 7, a pressure decreasing amount PL2 at the time when the urea addition valve 230 is clogged is smaller than a pressure decreasing amount PL1 at the time when the urea addition valve. 230 is not clogged.

Then, the rate of decrease in the urea pressure PN decreases as the actual addition amount QER decreases due to an increase in the amount of clogging in the urea addition valve 230. Therefore, the pressure decreasing amount PL decreases as the amount of clogging in the urea addition valve 230 increases.

As the temperature of the aqueous urea solution in the urea addition valve 230 decreases, the viscosity of aqueous urea solution increases, so the actual addition amount QER of the aqueous urea solution added from the urea addition valve 230 decreases. Accordingly, the pressure decreasing amount PL decreases as the temperature of the aqueous urea solution in the urea addition valve 230 decreases.

For example in FIG. 7 previously referred to, even if the urea addition valve 230 is clogged to the same extent as indicated by the alternate long and short dash line L2, the actual addition amount QER is smaller due to an increase in the viscosity of aqueous urea solution when the temperature of the aqueous urea solution in the urea addition valve 230 is low than when the temperature of aqueous urea solution is high. Therefore, as indicated by the alternate long and two short dashes line L3 in FIG. 7, even in the case where the degree of clogging remains unchanged, when the temperature of the aqueous urea solution in the urea addition valve 230 is low, the rate of decrease in the urea pressure PN after the opening of the urea addition valve 230 is lower than in the state indicated by the alternate long and short dash line L2. A pressure decreasing amount PL3 at this low temperature is smaller than the aforementioned pressure decreasing amount PL2.

In this manner, the pressure decreasing amount PL between the opening of the urea addition valve 230 and the lapse of the predetermined time can be utilized as a substitute value for the aforementioned decreasing time TL, namely, a substitute value for the rate of decrease in the urea pressure PN.

In the present embodiment of the invention, the pressure decreasing amount PL as the amount of decrease in the urea pressure PN is measured instead of the decreasing time TL described in the first embodiment of the invention. Then, the urea addition amount QE is corrected such that the amount of the aqueous urea solution added from the urea addition valve 230 increases as the pressure decreasing amount PL decreases.

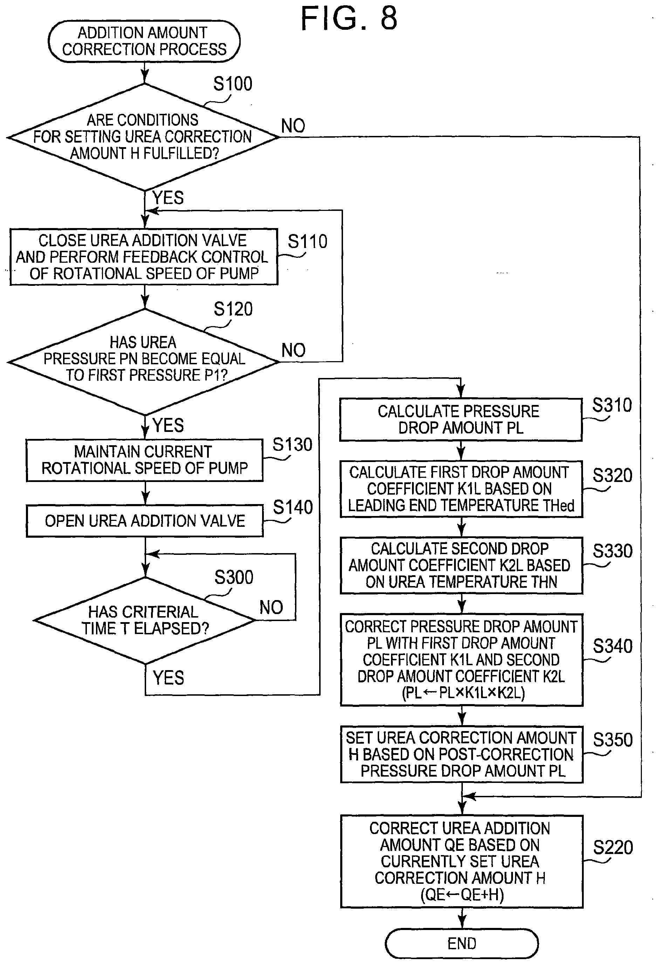

FIG. 8 shows a procedure of an addition amount correction process of the present embodiment of the invention, which is performed by the control device 80. In FIG. 8, steps where the same processing contents as those shown previously in FIG. 3 are executed are denoted by the same step numbers respectively.

When the present process is started, the control device 80 determines whether or not all the conditions for setting the aforementioned urea correction amount H are fulfilled (S100). As these setting conditions, a condition "that the supply of fuel to the engine 1 be suspended" and a condition that "a predetermined period have elapsed after the last setting of the urea correction amount H (e.g., that the running distance or elapsed time after the last setting of the urea correction amount H have reached a predetermined threshold etc.)" are set.

Then, in case even one of these setting conditions is not fulfilled (S100: NO), the control device 80 adds the currently set urea correction amount H to the urea addition amount QE, thereby correcting the urea addition amount QE (S220). In case the urea correction amount H is not set even once, the urea correction amount H is corrected with a predetermined initial value (e.g., "0" or the like) of the urea correction amount H. Then, the control device 80 temporarily ends the present process. Thus, the urea addition amount QE is corrected, and the control device 80 performs drive control of the urea addition valve 230 such that the post-correction urea addition amount QE is added from the urea addition valve 230.

On the other hand, when all the conditions for setting the urea correction amount H are fulfilled (S100: YES), the control device 80 closes the urea addition valve 230, and performs feedback control of the rotational speed of the pump 220 such that the urea pressure PN becomes equal to the predetermined first pressure P1 (S110).

Subsequently, the control device 80 determines whether or not the urea pressure PN has become equal to the first pressure P1 (S120). When the urea pressure PN has not become equal to the first pressure P1 (S120: NO), the control device 80 performs feedback control of the pump 220 with the urea addition valve 230 closed by repeating the respective processing contents of step S110 and step S120 until the urea pressure PN becomes equal to the first pressure P1.

On the other hand, in case the urea pressure PN has become equal to the first pressure P1 (S120: YES), the control device 80 maintains the current rotational speed of the pump 220 (S130). Thus, the urea pressure PN is held equal to the first pressure P1.

The control device 80 opens the urea addition valve 230 (S140) when the rotational speed of the pump 220 is maintained. Subsequently, the control device 80 determines whether or not the predetermined criterial time T has elapsed after the opening of the urea addition valve 230 (S300). A time that allows the difference in the aforementioned pressure decreasing amount PL that results from the degree of clogging of the urea addition valve 230 and the change in the viscosity of aqueous urea solution to be appropriately detected is set in advance as this criterial time T. Then, when the criterial time T has not elapsed (S300: NO), the control device 80 repeatedly executes the processing contents of making a determination in step S300 until the criterial time T elapses.

On the other hand, when the criterial time T has elapsed (S300: YES), the control device 80 calculates the pressure decreasing amount PL (S310). In this step S310, the pressure decreasing amount PL is obtained by subtracting the urea pressure PN detected upon the lapse of the criterial time T from the aforementioned first pressure P1.

Subsequently, the control device 80 calculates a first decreasing amount coefficient K1L based on the leading end temperature THed of the urea addition valve 230 (S320). The first decreasing amount coefficient K1L is a coefficient for correcting the pressure decreasing amount PL, and is variably set within a range of "1 ≤ K1L ≤ an upper limit A". Incidentally, a suitable value for correcting the pressure decreasing amount PL is appropriately set as the upper limit A.

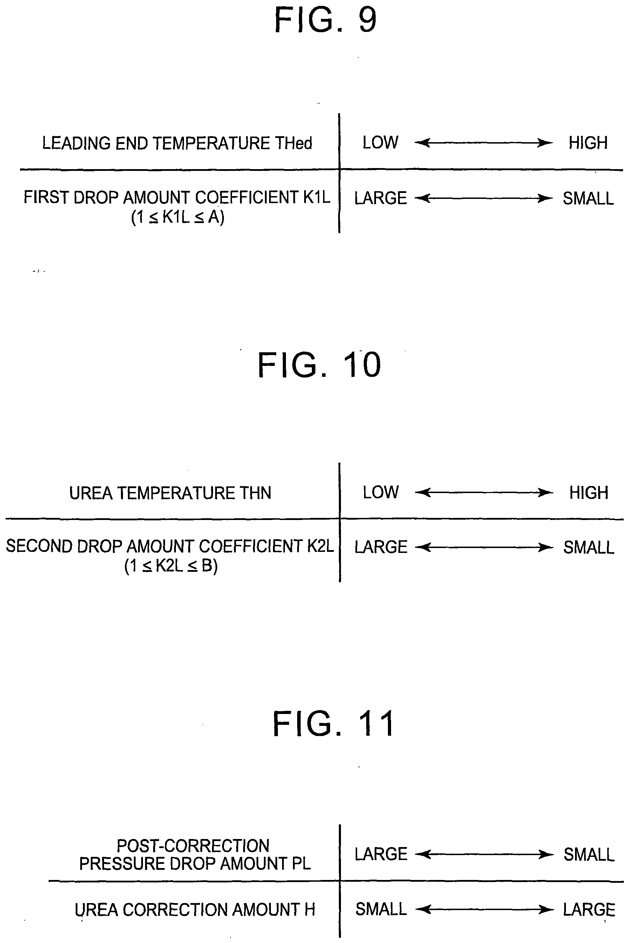

As shown in FIG. 9, the first decreasing amount coefficient K1L is variably set based on the leading end temperature THed, in such a manner as to increase as the leading end temperature. THed decreases. Subsequently, the control device 80 calculates a second decreasing amount coefficient K2L based on the urea temperature THN (S330). The second decreasing amount coefficient K2L is also a coefficient for correcting the aforementioned pressure decreasing amount PL, and is variably set within a range of "1 s K2L s an upper limit B". Incidentally, a suitable value for correcting the pressure decreasing amount PL is also appropriately set as the upper limit B.

As shown in FIG. 10, the second decreasing amount coefficient K2L is variably set based on the urea temperature THN, in such a manner as to increase as the urea temperature THN decreases. Subsequently, the control device 80 corrects the pressure decreasing amount PL by multiplying the pressure decreasing amount PL by the first decreasing amount coefficient K1L and the second decreasing amount K2L (PL×K1L×K2L) (S340).

Subsequently, the control device 80 sets the urea correction amount H based on the post-correction pressure decreasing amount PL (S350). This urea correction amount H is a value for correcting the aforementioned urea addition amount QE in an increasing manner. A positive value equal to or larger than "0" is set as this urea correction amount H.

As shown in FIG. 11, the urea correction amount H is variably set based on the post-correction pressure decreasing amount PL, in such a manner as to increase as the post-correction pressure decreasing amount PL decreases. Thus, the urea correction amount H is set, and the control device 80 corrects the urea addition amount QE by adding the currently set urea correction amount H, namely, the urea correction amount H set in step S350 to the urea addition amount QE (S220). Then, the control device 80 temporarily ends the present process. Thus, the urea addition amount QE is corrected, and the control device 80 performs drive control of the urea addition valve 230 such that the post-correction urea addition amount QE is added from the urea addition valve 230.

Next, the operation of the addition amount correction process according to the present embodiment of the invention will be described. As shown previously in FIG. 11, the urea correction amount H is variably set in such a manner as to increase as the post-correction pressure decreasing amount PL decreases, namely, as the rate of decrease in the urea pressure PN after the opening of the urea addition valve 230 decreases. Therefore, the urea addition amount QE is corrected such that the actual addition amount of the aqueous urea solution added from the urea addition valve 230 increases as the amount of insufficiency in the actual addition amount QER increases with respect to the required urea addition amount due to the clogging of the urea addition valve 230. Owing to this addition amount correction process, the actual addition amount QER is restrained from becoming insufficient due to the clogging of the urea addition valve 230.

In the present embodiment of the invention as well, the urea correction amount H as the increase correction amount for the urea addition amount QE is reduced as the temperature of the aqueous urea solution in the urea addition valve 230 decreases. More specifically, the temperature of the aqueous urea solution in the urea addition valve 230 decreases as the leading end temperature THed of the urea addition valve 230 decreases. Therefore, as shown previously in FIG 9, the value of the first decreasing amount coefficient K1L is increased as the leading end temperature THed of the urea addition valve 230 decreases. Accordingly, the post-correction pressure decreasing amount PL, which is obtained by being multiplied by the first decreasing amount coefficient K1L, increases as the leading end temperature THed decreases, so the urea correction amount H for correcting the urea addition amount QE in an increasing manner is set to a smaller amount.

When the urea correction amount H is thus corrected based on the leading end temperature THed of the urea addition valve 230, the temperature of the aqueous urea solution supplied to the urea addition valve 230 is also taken into account. More specifically, as shown previously in FIG. 11, the value of the second decreasing amount coefficient K2L is increased as the urea temperature THN as the temperature of the aqueous urea solution supplied to the urea addition valve 230 decreases. Accordingly, the post-correction pressure decreasing amount PL, which is obtained by being multiplied by the second decreasing amount coefficient K2L, increases as the urea temperature THN decreases, so the urea correction amount H for correcting the urea addition amount QE in an increasing manner is set to a smaller amount. Accordingly, the urea correction amount H is more accurately corrected in accordance with the temperature of the aqueous urea solution in the urea addition valve 230.

In this manner, the urea correction amount H is set to a suitable amount in accordance with the temperature of the aqueous urea solution in the urea addition valve 230. Therefore, the urea addition amount QE can be restrained from being excessively corrected to be increased as the temperature of aqueous urea solution decreases: Thus, the addition amount of aqueous urea solution can be appropriately restrained from becoming insufficient due to the clogging of the urea addition valve 230.

As described above, according to the present embodiment of the invention, the following effects can be obtained. The addition amount correction process for correcting the urea addition amount QE such that the amount of the aqueous urea solution added from the urea addition valve 230 increases as the rate of decrease in the urea pressure PN after the opening of the urea addition valve 230 decreases is performed. More specifically, the urea addition amount QE is corrected such that the amount of the aqueous urea solution added from the urea addition valve 230 increases as the pressure decreasing amount PL as the decreasing amount of the urea pressure PN between the opening of the urea addition valve 230 and the lapse of the predetermined criterial time T decreases. Then, in the aforementioned addition amount correction process, the urea correction amount H for correcting the urea addition amount QE in an increasing manner is reduced as the leading end temperature THed of the urea addition valve 230 decreases. Accordingly, the addition amount of aqueous urea solution can be appropriately restrained from becoming insufficient due to the clogging of the urea addition valve 230.

The urea correction amount H for the urea addition amount QE in the addition amount correction process is reduced as the urea temperature THN as the temperature of the aqueous urea solution supplied to the urea addition valve 230 decreases. Accordingly, the urea correction amount H can be more accurately corrected in accordance with the temperature of the aqueous urea solution in the urea addition valve 230.

The aforementioned respective embodiments of the invention can also be carried out after being modified as follows. As the rate of decrease in the urea pressure PN, the decreasing time TL and the pressure decreasing amount PL are measured. In addition, it is also acceptable to measure a pressure decreasing amount per unit time after the opening of the urea addition valve 230, and actually calculate a rate of decrease in the urea pressure PN.

The decreasing time TL is multiplied by the first time coefficient K1T, or the pressure decreasing amount PL is multiplied by the first decreasing amount coefficient K1L. However, the invention is not limited to such a mode. The decreasing time TL or the pressure decreasing amount PL may be corrected according to an appropriate mode, such that the urea correction amount H decreases as the temperature of the urea addition valve 230 decreases.

The decreasing time TL is multiplied by the second time coefficient K2T, or the pressure decreasing amount PL is multiplied by the second decreasing amount coefficient K2L. However, the invention is not limited to such a mode. The decreasing time TL or the pressure decreasing amount PL may be corrected according to an appropriate mode, such that the urea correction amount H decreases as the temperature of the aqueous urea solution supplied to the urea addition valve 230 decreases.

The decreasing time TL or the pressure decreasing amount PL is corrected based on the leading end temperature THed of the urea addition valve 230 and the urea temperature THN. It should be noted herein that the temperature variation range of the urea temperature THN is narrower than the temperature variation range of the leading end temperature THed. Therefore, the influence of the urea temperature THN on the temperature of the aqueous urea solution in the urea addition valve 230 is smaller than the influence of the leading end temperature THed. Accordingly, for the sake of simplicity, the correction with the urea temperature THN may be omitted. That is, the calculation of the second time coefficient K2T or the second decreasing amount coefficient K2L may be omitted. In this case as well, an effect similar to that of the first embodiment of the invention or an effect similar to that of the second embodiment of the invention is obtained.

Although aqueous urea solution is used as the reducing agent, it is also acceptable to use other reducing agents.

## Claims

1. An exhaust gas control apparatus for an internal combustion engine (1), the exhaust gas control apparatus comprising:
a catalyst (41) that purifies exhaust gas through addition of a reducing agent;
an addition valve (230) that adds the reducing agent to an exhaust passage;
a pressure detection unit (260) that detects a pressure of the reducing agent in the addition valve (230); and **characterized by** a control unit (80) comprising means to control an amount of the reducing agent added by the addition valve (230), the control unit (80) comprising means to perform an addition amount correction process for correcting the amount of the reducing agent added by the addition valve (230) such that the addition amount increases as a rate of decrease in the pressure of the reducing agent after opening of the addition valve (230) decreases, and the control unit (80) further comprising means to reduce an increase correction amount for the addition amount through the addition amount correction process as a temperature of a leading end of the addition valve (230) decreases.

2. The exhaust gas control apparatus according to claim 1, wherein
the control unit (80) is comprising means to reduce the increase correction amount as a temperature of the reducing agent supplied to the addition valve (230) decreases.

3. The exhaust gas control apparatus according to claim 1 or 2, wherein
the control unit (80) is comprising means to detect the rate of decrease by measuring a decreasing time that is required until the pressure of the reducing agent after opening of the addition valve (230) decreases to a predetermined threshold, and the control unit (80) is comprising means to correct the amount of the reducing agent added from the addition valve (230) such that the addition amount increases as the decreasing time is long.

4. The exhaust gas control apparatus according to claim 1 or 2, wherein
the control unit (80) is comprising means to detect the rate of decrease by measuring a decreasing amount of the pressure of the reducing agent between opening of the addition valve (230) and lapse of a predetermined time, and the control unit (80) is further comprising means to correct the amount of the reducing agent added from the addition valve (230) such that the addition amount increases as the decreasing amount decreases.

5. A control method for an internal combustion engine (1) that is equipped with a catalyst (41) that purifies exhaust gas through addition of a reducing agent, and an addition valve (230) that adds the reducing agent to an exhaust passage, the control method comprising:
detecting a pressure of the reducing agent in the addition valve (230); and
performing an addition amount correction process for correcting an amount of the reducing agent added from the addition valve (230) such that the addition amount increases as a rate of decrease in the pressure of the reducing agent after opening of the addition valve (230) decreases, and reducing an increase correction amount for the addition amount through the addition amount correction process as a temperature of a leading end of the addition valve (230) decreases.

## Patentansprüche

1. Ein Abgassteuerapparat für einen Verbrennungsmotor (1), wobei der Abgassteuerapparat aufweist:
einen Katalysator (41), der Abgas durch Zugabe eines Reduktionsmittels reinigt,
ein Zugabeventil (230), das das Reduktionsmittel einem Abgaskanal hinzufügt,
eine Druckerfassungseinheit (260), die einen Druck des Reduktionsmittels in dem Zugabeventil (230) erfasst, und
durch eine Steuereinheit (80) gekennzeichnet ist, die eine Einrichtung aufweist, um einen Betrag des durch das Zugabeventil (230) hinzugefügten Reduktionsmittels zu steuern, wobei die Steuereinheit (80) eine Einrichtung aufweist, um einen Zugabebetragkorrekturprozess auszuführen, damit der Betrag des durch das Zugabeventil (230) hinzugefügten Reduktionsmittels korrigiert wird, so dass sich der Zugabebetrag erhöht, wenn sich eine Rate des Verringerns bei dem Druck des Reduktionsmittels nach dem Öffnen des Zugabeventils (230) verringert, und wobei die Steuereinheit (80) außerdem eine Einrichtung aufweist, um einen Erhöhungskorrekturbetrag für den Zugabebetrag durch den Zugabebetragkorrekturprozess zu reduzieren, wenn sich eine Temperatur eines vorderen Endes des Zugabeventils (230) verringert.

2. Der Abgassteuerapparat nach Anspruch 1, wobei
die Steuereinheit (80) eine Einrichtung aufweist, um den Erhöhungskorrekturbetrag zu reduzieren, wenn sich eine Temperatur des Reduktionsmittels, das dem Zugabeventil (230) zugeführt wird, verringert.

3. Der Abgassteuerapparat nach den Ansprüchen 1 oder 2, wobei
die Steuereinheit (80) eine Einrichtung aufweist, um die Rate des Verringerns durch Messen einer Verringerungszeit zu erfassen, die benötigt wird, bis sich der Druck des Reduktionsmittels nach dem Öffnen des Zugabeventils (230) auf einen vorbestimmten Schwellwert verringert, und die Steuereinheit (80) eine Einrichtung aufweist, um den Betrag des Reduktionsmittels, das vom Zugabeventil (230) hinzugefügt wird, zu korrigieren, so dass sich der Zugabebetrag erhöht, wenn die Verringerungszeit lang ist.

4. Der Abgassteuerapparat nach den Ansprüchen 1 oder 2, wobei
die Steuereinheit (80) eine Einrichtung aufweist, um die Rate des Verringerns durch Messen eines Verringerungsbetrags des Druckes des Reduktionsmittels zwischen dem Öffnen des Zugabeventils (230) und dem Ablauf einer vorbestimmten Zeit zu erfassen, und die Steuereinheit (80) außerdem eine Einrichtung aufweist, um den Betrag des vom Zugabeventil (230) hinzugefügten Reduktionsmittels zu korrigieren, so dass sich der Zugabebetrag erhöht, wenn sich der Verringerungsbetrag verringert.

5. Ein Steuerverfahren für einen Verbrennungsmotor (1), der mit einem Katalysator (41), der Abgas durch Zugabe eines Reduktionsmittels reinigt, und einem Zugabeventil (230), das das Reduktionsmittel einem Abgaskanal hinzufügt, ausgestattet ist, wobei die Steuerverfahren aufweist:
Erfassen eines Druckes des Reduktionsmittels im Zugabeventil (230), und
Durchführen eines Zugabebetragkorrekturprozesses zum Korrigieren eines Betrages des vom Zugabeventil (230) hinzugefügten Reduktionsmittels, so dass sich der Zugabebetrag erhöht, wenn sich eine Rate des Verringerns beim Druck des Reduktionsmittels nach dem Öffnen des Zugabventils (230) verringert, und zum Verringern eines Erhöhungskorrekturbetrags für den Zugabebetrag durch den Zugabebetragkorrekturprozess, wenn sich eine Temperatur eines vorderen Endes des Zugabeventils (230) verringert.

## Revendications

1. Appareil de régulation de gaz d'échappement, destiné à un moteur à combustion interne (1), l'appareil de régulation de gaz d'échappement comprenant :
un catalyseur (41) qui purifie des gaz d'échappement par ajout d'un agent réducteur ;
une soupape d'ajout (230) qui ajoute l'agent réducteur dans un passage d'échappement ;
une unité de détection de pression (260) qui détecte une pression de l'agent réducteur dans la soupape d'ajout (230) ; et
**caractérisé par** une unité de commande (80) comprenant des moyens destinés à réguler une quantité de l'agent réducteur ajoutée par la soupape d'ajout (230), l'unité de commande (80) comprenant des moyens destinés à exécuter un processus de correction de quantité d'ajout pour corriger la quantité de l'agent réducteur ajoutée par la soupape d'ajout (230), de manière que la quantité d'ajout augmente à mesure qu'une vitesse de diminution de la pression de l'agent réducteur diminue, après ouverture de la soupape d'ajout (230), l'unité de commande (80) comprenant en outre des moyens destinés à réduire une grandeur de correction par augmentation de la quantité d'ajout, au moyen du processus de correction de quantité d'ajout, à mesure qu'une température d'extrémité avant de la soupape d'ajout (230) diminue.

2. Appareil de régulation de gaz d'échappement selon la revendication 1, dans lequel :
l'unité de commande (80) comprend des moyens destinés à réduire la grandeur de correction par augmentation, à mesure que la température de l'agent réducteur fourni à la soupape d' ajout (230) diminue.

3. Appareil de régulation de gaz d'échappement selon la revendication 1 ou 2, dans lequel :
l'unité de commande (80) comprend des moyens destinés à détecter la vitesse de diminution, en mesurant un temps de diminution qui est nécessaire pour que la pression de l'agent réducteur, après ouverture de la soupape d'ajout (230), diminue jusqu'à un seuil prédéterminé, et l'unité de commande (80) comprend des moyens destinés à corriger la quantité de l'agent réducteur ajoutée depuis la soupape d'ajout (230), de manière que la quantité d'ajout augmente à mesure que le temps de diminution s'allonge.

4. Appareil de régulation de gaz d'échappement selon la revendication 1 ou 2, dans lequel :
l'unité de commande (80) comprend des moyens destinés à détecter la vitesse de diminution, en mesurant une grandeur de diminution de la pression de l'agent réducteur entre l'ouverture de la soupape d'ajout (230) et l'expiration d'un temps prédéterminé, et l'unité de commande (80) comprend en outre des moyens destinés à corriger la quantité de l'agent réducteur ajoutée depuis la soupape d'ajout (230), de manière que la quantité d'ajout augmente à mesure que la grandeur de diminution diminue.

5. Procédé de commande d'un moteur à combustion interne (1) qui est équipé d'un catalyseur (41) qui purifie des gaz d'échappement par ajout d'un agent réducteur, et d'une soupape d'ajout (230) qui ajoute l'agent réducteur dans un passage d'échappement, le procédé de commande comprenant les étapes suivantes :
détecter une pression de l'agent réducteur dans la soupape d'ajout (230) ; et
exécuter un processus de correction de quantité d'ajout pour corriger une quantité de l'agent réducteur ajoutée depuis la soupape d'ajout (230), de manière que la quantité d'ajout augmente à mesure qu'une vitesse de diminution de la pression de l'agent réducteur diminue, après ouverture de la soupape d'ajout (230), et réduire une grandeur de correction par augmentation de la quantité d'ajout au moyen du processus de correction de quantité d'ajout, à mesure qu'une température d'extrémité avant de la soupape d'ajout (230) diminue.
